# EUROPÄISCHE PATENTANMELDUNG

(11) **EP 1 614 567 A2**
(43) Veröffentlichungstag der Anmeldung: **11.01.2006**
(21) Anmeldenummer: 05014761.0
(22) Anmeldetag: 07.07.2005
(51) Int. Cl.: B60J 5/10

(54) **Mehrteilige Heckklappe für ein Kraftfahrzeug**

(30) Priorität: 07.07.2004 DE 102004032750
(71) Anmelder: GM Global Technology Operations, Inc., Detroit, MI 48265-3000 (US)
(72) Erfinder: Baccelli, Gian Luca, 65232 Taunusstein-Orlen (DE); Blobel, Andreas, 65468 Trebur-Geinsheim (DE)
(74) Vertreter: Strauss, Peter

(57) **Zusammenfassung**

Die vorstehend diskutierte Erfindung schlägt erstmals eine Heckklappe (1) für ein Kraftfahrzeug mit einem an der Kraftfahrzeugstruktur anlenkbaren Heckklappenrahmen (3) sowie einem im oder am Heckklappenrahmen (3) gelagerten Heckklappenelement (23) vor. Das Heckklappenelement (23) weist einen zumindest abschnittsweise näherungsweise aufrecht orientierten, zur unteren Ladekante (85) benachbarten Heckklappenabschnitt (24) der Kraftfahrzeugheckklappe auf, wobei das Heckklappenelement (23) von wenigstens einem Heckklappenrahmenabschnitt (7, 9, 11, 13, 17), vorzugsweise im Wesentlichen in aufrechter Richtung verschieblich und/oder verschwenkbar gehalten ist.

## Beschreibung

Die vorliegende Erfindung betrifft eine Heckklappe für ein Kraftfahrzeug mit einem an der Kraftfahrzeugstruktur anlenkbaren Heckklappenrahmen sowie einem daran gelagerten Heckklappenelement, nach dem Oberbegriff des Anspruchs 1.

Aus der Praxis sind eine Mehrzahl von unterschiedlichen Kraftfahrzeugmodellen, wie beispielsweise Fließheckfahrzeuge, Stufenheckfahrzeuge, Schräghecklimousinen, Großraumlimousinen, Kombis, oder dergleichen Kraftfahrzeugtypen bekannt geworden. Die meisten dieser Kraftfahrzeuge verfügen über eine Heckklappe, die nach dem Öffnen den Zugang zum im Kraftfahrzeug befindlichen Laderaum frei gibt, wobei der Laderaum häufig gleichbedeutend ist mit dem Kofferraum plus gegebenenfalls beispielsweise für lange Ladegüter mit nutzbarem Ladevolumen im Bereich einer umgeklappten Rücksitzbank.

Die Laderaumöffnung entspricht dabei im Wesentlichen der Öffnung, die durch die beispielsweise nach oben aufschwenkende Heckklappe frei gegeben wird. Derlei Heckklappen sind üblicherweise an der Kraftfahrzeugstruktur, beispielsweise an der oberen hinteren, zwischen den beiden C-Säulen angeordneten Dach-Querstrebe oder an der unterhalb der Heckscheiben angeordneten Querstrebe angelenkt. Zudem weisen übliche Heckklappen häufig einen beispielsweise aus Prägeblechen geformten Heckklappenrahmen auf.

Am Heckklappenrahmen wurde zunehmend gerade bei jüngeren Modellen von Kombilimousinen ein im Heckklappenrahmen gelagertes Heckklappenelement als Heckscheibe ausgebildet, die zudem oftmals separat zur Heckklappe geöffnet werden kann. Damit soll ein zusätzlicher, gleichwohl kleinerer Zugang zum Laderaum frei gegeben werden können, um beispielsweise Kleidungsstücke oder dergleichen leichte Gegenstände zu oberst auf die bereits im Kofferraum befindlichen Gepäckstücke auflegen zu können, ohne dabei die Heckklappe als solche nochmals öffnen zu müssen.

Ferner sind aus der Praxis die sogenannten Pickup's bekannt, bei denen die Bordwand der Ladefläche, welche den in aller Regel nach oben offenen Laderaum auf der Heckpritsche umgibt, seitlich am Rand und/oder im hinteren heckseitigen Bereich nach unten weggeklappt werden kann, wie man dies beispielsweise von Lastkraftwagen kennt.

Bei den herkömmlichen Heckklappen für Kraftfahrzeuge wird es zunehmend als nachteilig empfunden, dass zum Laden von überlangen, flachen Ladegütern, wie beispielsweise Brettern, Rohren, Biertischen, Bänken, Leitern, Gipskartonplatten, Möbelstücken oder dergleichen, die gesamte Heckklappe nach oben hoch geschwenkt werden muss, um diese wiederum nach dem Beladen beispielsweise mit Schnüren, Gurten oder anderen Verzurrmitteln so gut als möglich im teilgeschlossenen Zustand nach unten fest zu halten. Dabei kommt jedoch die Unterkante der Heckklappe, die im regelrecht geschlossenen Zustand der unteren Ladekante benachbart ist und mit dieser abschließt, zwangsweise auf dem Ladegut zu liegen. Dies führt jedoch nachteilig dazu, dass Abgase durch die teilweise offene Heckklappe in den Font einströmen können. Daraus resultieren nicht nur eine Geruchsbelästigung des Fahrers, sondern es kann unter Umständen zu einer gesundheitlichen Gefährdung kommen. Schließlich ist es von Nachteil, dass die auf der obersten Lage der geladenen überlangen Güter aufliegende Unterkante der Heckklappe deren oberste Schicht häufig nachhaltig beschädigt.

Dementsprechend ist es Aufgabe der vorliegenden Erfindung, eine herkömmliche Kraftfahrzeugheckklappe der vorgenannten Gattung derart zu verbessern, dass eine Freigabe einer separaten Ladeöffnung im unteren Heckklappenbereich für beispielsweise überlanges, flaches Ladegut ermöglicht wird, ohne hierfür die gesamte Heckklappe öffnen zu müssen.

Diese Aufgabe wird gelöst durch die Merkmale des Anspruchs 1.

Dabei wird eine Heckklappe für ein Kraftfahrzeug mit einem an der Kraftfahrzeugstruktur anlenkbaren Heckklappenrahmen sowie einem daran gelagerten Heckklappenelement vorgeschlagen, bei der das Heckklappenelement erstmals einen zumindest abschnittsweise näherungsweise aufrecht orientierter, zur unteren Ladekante benachbarter Heckklappenabschnitt aufweist, wobei das Heckklappenelement von wenigstens einem Heckklappenrahmenabschnitt, vorzugsweise im Wesentlichen in aufrechter Richtung, verschieblich und/oder, vorzugsweise um eine im Wesentlichen quer zur Fahrzeuglängsrichtung orientierte Achse, verschwenkbar gehalten ist.

Auf diese Weise kann erstmals in vorteilhafter Weise ein separater Bereich der Heckklappe unabhängig von der gesamten Heckklappe derart geöffnet werden, dass eine separate Ladeöffnung im unteren Heckklappenbereich frei gegeben werden kann. Durch diese separate Laderaumöffnung im unteren Heckklappenbereich kann dann überlanges, flaches Ladegut, wie beispielsweise Bretter, Rohre, Leitern oder dergleichen in den Laderaum des Kraftfahrzeugs geladen werden, ohne hierfür extra die gesamte Heckklappe öffnen zu müssen.

Darüber hinaus bietet dies den wesentlichen Vorteil, dass der näherungsweise aufrecht orientierte, verschieblich und/oder verschwenkbar gelagerte Heckklappenabschnitt nach Abschluss des Beladevorgangs wiederum soweit nach unten geschoben bzw. verschwenkt werden kann, dass dieser gerade auf der obersten Schicht des Ladeguts sauber aufsitzt. Dadurch, dass dieser Heckklappenabschnitt zudem wesentlich leichter ist, als die gesamte Heckklappe, besteht keine nennenswerte Gefahr von Beschädigungen der Ladegüter oder eines Verkratzens deren Oberfläche. Zugleich fällt die bei der so erzeugten separaten Laderaumöffnung verbleibende offene restliche Querschnittsfläche relativ klein aus, so dass auch die Gefahr reduziert ist, dass Abgase an dem geladenen Ladegut vorbei in den Innenraum des Kraftfahrzeuges strömen können.

Schließlich verbessert sich auch die Aerodynamik eines derart beladenen Fahrzeugs zumindest in geringem Umfang, da keine nach oben offen stehende Heckklappe zu befürchten ist. Nicht zuletzt kann dadurch, dass die Heckklappe als solche verschlossen bleiben kann, trotz in Abhängigkeit von der Ladegutmenge teilweise geöffnetem Heckklappenelement eine gute Sichtbarkeit der dritten Bremsleuchte an der Dachunterkante des Fahrzeugs gewährleistet werden, so dass auch diesbezüglich keinerlei Gefährdung des nachfolgenden Verkehrs zu befürchten ist.

Vorteilhafte Weiterbildungen der Erfindung ergeben sich aus den Merkmalen der Unteransprüche.

So wird in einer bevorzugten Ausführungsform der Heckklappe vorgesehen, dass das Heckklappenelement mittels einer Parallelführung von zwei gegenüber liegenden, im Wesentlichen senkrecht orientierten Heckklappenrahmenabschnitten, gleitverschieblich gehalten ist. Bei dieser vorteilhaften Variante wird die Hecköffnung des Kraftfahrzeugs durch eine Heckklappe mit einem einteiligem Heckklappenrahmen verschlossen. Dabei ist der Heckklappenrahmen mit dessen oberem Rahmenabschnitt an der oberen hinteren Dachkante bzw. in diesem Bereich an der dortigen Kraftfahrzeugstruktur angelenkt. Die Anlenkung kann in üblicherweise mittels Scharnieren oder dergleichen erfolgen.

Zur Abstützung der Heckklappe gegen ein ungewolltes Verschließen können Federspeicher-/Dämpferelemente oder dergleichen vorgesehen sein. Darüber hinaus kann für ein leichteres Öffnen ein weiterer Federspeicher vorgesehen sein. Alternativ kann daran gedacht werden, dass Öffnen der Heckklappe durch elektrische Antriebselemente oder dergleichen hydraulische oder sonstige Antriebe zu unterstützen.

Der Heckklappenrahmen reicht beispielsweise mit dessen unterem Ende bis zur Laderaumkante und schließt gegen diese im geschlossenen Zustand der Heckklappe dicht ab. Im auf diese Weise quasi U-förmig ausgebildeten hinteren Rahmenabschnitt des Heckklappenrahmens ist dann ein als Paneel ausgebildeter Heckklappenabschnitt entlang der im Wesentlichen senkrechten Abschnitte des Heckklappenrahmens mittels einer Parallelführung in aufrechter Richtung verschieblich gelagert. Durch ein Hochschieben des beispielsweise als Paneel ausgebildeten Heckklappenabschnitts kann dann ein separater Bereich der Heckklappe als untere separate Laderaumöffnung zum Beladen des Kofferraums mit längerem Ladegut frei gegeben werden. Diese separate Ladeöffnung kann dann wieder durch herunter schieben des Paneels verschlossen werden.

In einer weiter bevorzugten Ausführungsform ist vorgesehen, dass das Heckklappenelement an einem näherungsweise waagerecht orientierten, im Wesentlichen quer zur Fahrzeuglängsrichtung X verlaufenden Heckklappenrahmenabschnitt gleitverschieblich geführt ist. Im Unterschied zur vorstehend diskutierten Ausführungsform endet dabei der Heckklappenrahmen im Prinzip im Bereich der Windabrisskante der Heckklappe. Das beispielsweise wiederum als Paneel ausgebildete Heckklappenelement weist dabei zusätzlich sämtliche Struktur-, Verkleidungs- und Mechanikelemente auf, die benötigt werden, um das nach oben verschiebliche Heckklappenelement zum Öffnen nach oben und zum Schließen wieder nach unten ziehen zu können.

So sind beispielsweise zwei an dem Heckklappenrahmen elastisch befestigte Gleiter vorgesehen, die den beweglichen Heckklappenabschnitt bzw. das als Paneel ausgebildete Heckklappenelement entlang der daran befestigten Laufbahnen führen. Die Hubbewegung kann dabei beispielsweise durch zwei am Heckklappenrahmen ferner befestigte Elektromotoren erfolgen, deren Ritzel beispielsweise zwei an einem Verkleidungs- oder Strukturteil des Heckklappenelements befestigte Zahnstangen antreiben. Es sind auch weitere Alternativen denkbar, mittels derer eine vollautomatische Hubbewegung des aufrecht orientierten Heckklappenabschnittes bzw. des Heckklappenelements durchgeführt werden kann.

In einer weiter bevorzugten Ausführungsform der Heckklappe ist vorgesehen, dass das Heckklappenelement mittels gegenüber liegenden, im Wesentlichen in Richtung der jeweiligen C-Säule orientierten Heckklappenrahmenabschnitten vorgesehenen Führungen verschieblich geführt und an einem näherungsweise waagerecht orientierten, im Wesentlichen quer zur Fahrzeugrichtung X verlaufenden weiteren Heckklappenrahmenabschnitt mittels dort angelenkten Kulissenauslegern, die mit am Heckklappenabschnitt angeordneten Kulissenlaufbahn gleitverschieblich zusammen wirken, gehalten ist.

Dabei kann die in Fahrtrichtung gesehen vordere Kante des beispielsweise wiederum als Paneel ausgebildeten Heckklappenabschnitts oder Heckklappenelements entlang der neben bzw. unter einer Heckscheibe liegenden Führungen gleiten. Eine Kulissenlaufbahn kann beispielsweise links und rechts am Rand des aufrecht orientierten Heckklappenelements randseitig angeordnet sein, die sich im Wesentlichen zwischen Windabrisskante und Klappenunterkante bzw. der benachbarten Ladekante erstreckt und beispielsweise direkt am Ileckklappenabschnitt oder an einem diesem zugeordneten Verkleidungsteil befestigt ist. Das mit dieser Kulissenlaufbahn zusammenwirkende Kulissenauslegerende führt das bewegliche Paneel bzw. das bewegliche Heckklappenelement dementsprechend an dessen unterer Hinterkante. Der Antrieb kann dabei mechanisch, manuell, elektrisch oder pneumatisch entlang der Führungen erfolgen. Somit lässt sich das Heckklappenelement nach oben über die schräg stehende Heckscheibe schieben und wieder nach unten zum Verschließen hinunter drücken.
Je nach Ausführungsform ist die vorstehend diskutierte Heckklappe beispielsweise als Fließheckfahrzeug-Heckklappe, als Stufenheck-Heckklappe, als Schrägheckfahrzeug-Heckklappe oder als gewöhnlicher Kofferraumdeckel ausgebildet. Der Heckklappenrahmen kann je nach Ausführungsform eine daran befestigte Heckscheibe aufweisen. Die Heckscheibe kann je nach Bedarf eine fest am Heckklappenrahmen verklebte Heckscheibe oder eine mittels Scharnieren angelenkte, nach oben aufklappbare Heckscheibe sein.

Dementsprechend ist je nach Ausführungsform die in Fahrtrichtung vordere Kante der Heckklappe entweder an der oberen Dachkante bzw. an der dortigen Fahrzeugstruktur oder an der hinteren unterkante des Heckfensters bzw. der dortigen Fahrzeugstruktur nach oben verschwenkbar angelenkt. Die Anlenkung kann, wie vorstehend bereits angesprochen, beispielsweise mittels Scharnieren oder dergleichen Elemente erfolgen. Je nach Ausführungsform der Heckklappe, sei es als gewöhnlicher Kofferraumdeckel oder als besonders große und schwere Heckklappe einer Großraumlimousine, kann deren Öffnen und Schließen beispielsweise mittels Federspeicher oder dergleichen Kraftelemente unterstützt werden. Deren Öffnen und Schließen kann je nach Ausführungsform auch mittels weiterer Antriebe beispielsweise elektrisch, pneumatisch, hydraulisch oder mechanisch unterstützt erfolgen.

Darüber hinaus sind Mischformen der vorstehend diskutierten Varianten denkbar.

Die vorstehend diskutierte Erfindung wird nachfolgend in Ausführungsbeispielen anhand der Figuren der Zeichnung näher erläutert. Es zeigt:
- Fig. 1: eine erste beispielhafte Ausführungsform einer Heckklappe mit einem näherungsweise aufrecht orientierten hinteren Heckklappenabschnitt, der im Heckklappenrahmen verschieblich geführt ist;
- Fig. 2: eine zweite beispielhafte Ausführungsform einer Heckklappe mit einem an einem näherungsweise waagerecht orientierten, im Wesentlichen quer zur Fahrzeuglängsrichtung X verlaufenden Heckklappenrahmenabschnitt gleitverschieblich geführten Heckklappenelement, das in Fig. 2a) in der nach oben offenen Stellung und in Fig. 2b) in der nach unten geschobenen, geschlossenen Stellung gezeigt ist;
- Fig. 3: die in Fig. 2 gezeigte Ausführungsform der Heckklappe in weiteren Detailansichten in Teilfiguren 3a) bis 3c);
- Fig. 4: eine dritte beispielhafte Ausführungsform einer Heckklappe, deren Funktionsweise in Teilfiguren 4a) bis 4b) näher dargestellt ist; und
- Fig. 5: eine vierte Ausführungsform einer beispielhaften Heckklappe mit einem verschwenkbar angelenkten hinteren unteren Heckklappenelement.

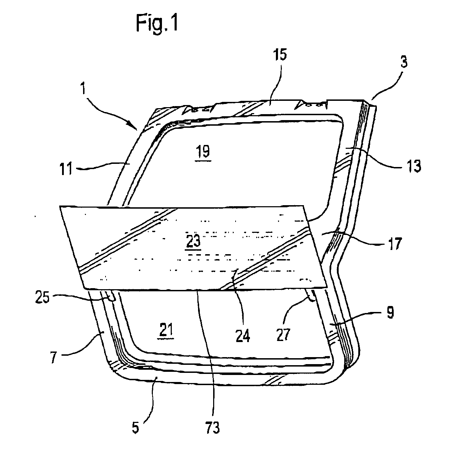

In Fig. 1 ist eine erste beispielhafte Ausführungsform einer Heckklappe 1 gezeigt. Die Kraftfahrzeugheckklappe 1 weist einen an der hier nicht näher dargestellten Kraftfahrzeugstruktur anlenkbaren Heckklappenrahmen 3 auf. Der Heckklappenrahmen 3 verfügt über einen unteren, im Wesentlichen waagerecht orientierten, quer zur Fahrzeuglängsrichtung verlaufenden Heckklappenrahmenabschnitt 5, zwei sich an diesem links und rechts anschließende seitliche Rahmenabschnitte 7 und 9, die in im Wesentlichen in Richtung der jeweiligen C-Säule orientierte Heckklappenrahmenabschnitte 11 und 13 übergehen, welche schließlich in einem weiteren, näherungsweise waagerecht orientierten, im Wesentlichen quer zur Fahrzeuglängsrichtung verlaufenden Heckklappenrahmenabschnitt 15 münden, der seinerseits im montierten Zustand der Heckklappe 1 der oberen hinteren Dachkante benachbart ist und an der dortigen Fahrzeugstruktur mittels Scharniere oder dergleichen angelenkt wird.

In einem mittleren Bereich des Heckklappenrahmens 3 verläuft ein weiterer, näherungsweise waagerecht orientierter, im Wesentlichen quer zur Fahrzeuglängsrichtung verlaufender Heckklappenrahmenabschnitt 17, der damit den IIeckklappenrahmen 13 im Wesentlichen in zwei näherungsweise rechteckige Teilrahmen 19 und 21 untergliedert. Der untere Teilrahmen 21 weist ferner ein Heckklappenelement 23 auf, das einen näherungsweise aufrecht orientierten, zur unteren Ladekante benachbarten Heckklappenabschnitt aufweist.

Das Heckklappenelement 23 ist mittels einer Parallelführung 25 bzw. 27, die an den beiden gegenüberliegenden Rahmenabschnitten 7 und 9 jeweils angeordnet ist, gleitverschieblich gehalten. Auf diese Weise kann das Heckklappenelement 23 bei Bedarf nach oben geschoben werden, um eine separate Laderaumöffnung freizugeben, so dass der Laderaum bzw. Kofferraum mit beispielsweise besonders langen Gütern beladen werden kann, ohne dass hierfür die gesamte Heckklappe 1 geöffnet werden müsste.

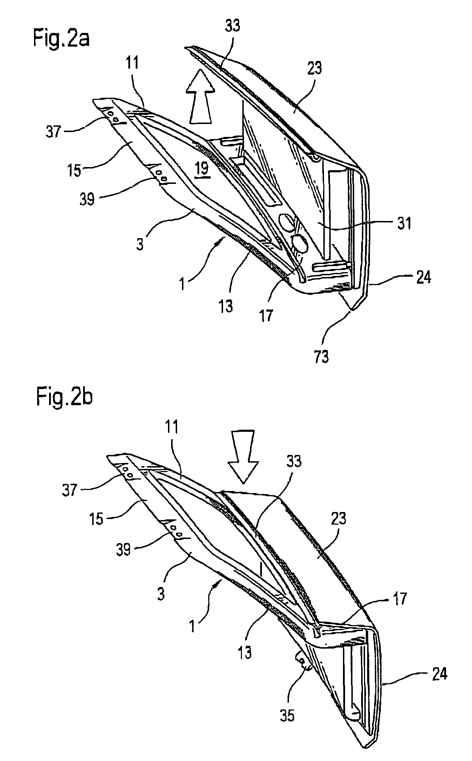

In Fig. 2 ist eine zweite beispielhafte Ausführungsform der Heckklappe 1 gezeigt. Das Heckklappenelement 23 ist bei dieser zweiten Ausführungsform an dem näherungsweise waagerecht orientierten, im Wesentlichen quer zur Fahrzeuglängsrichtung verlaufenden Heckklappenrahmenabschnitt 17 gleitverschieblich geführt. Dabei ist das Heckklappenelement 23 in Teilfigur 2a) in einer nach oben geschobenen, offenen Stellung gezeigt. Dementsprechend ist in Teilfigur 2b) das Heckklappenelement 23 in einer nach unten geschobenen, geschlossenen Stellung dargestellt.

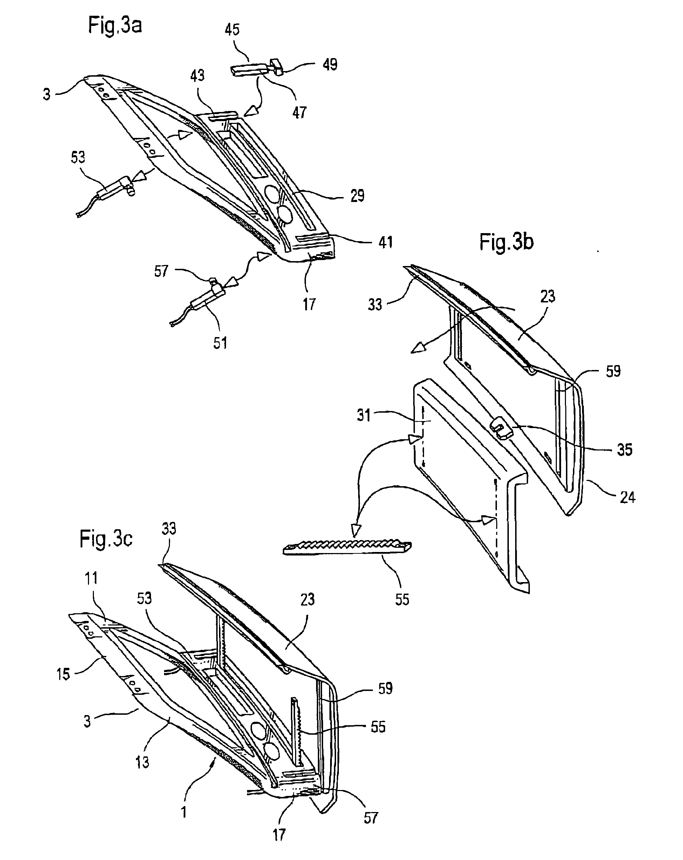

Wie insbesondere aus Fig. 3 bzw. Teilfiguren 3a) bis 3c) deutlich wird, ist in dem näherungsweise waagerecht orientierten, im Wesentlichen quer zur Fahrzeuglängsrichtung verlaufenden Heckklappenrahmenabschnitt 17 eine Öffnung 29 vorgesehen, in welcher ein entsprechendes Führungsteil 31 des Heckklappenelements 23 längs verschieblich nach oben und unten gleitend gelagert ist. Das Führungselement 31 bildet zugleich die innere Verkleidung des inneren hinteren Abschnitts der Heckklappe 1.

Am Heckklappenelement 23 ist ferner eine querverlaufende Dichtungslippe 33 angeordnet, welche das Heckklappenelement 23 mit dessen oberer Kante im geschlossenen Zustand beispielsweise gegen eine hier nicht näher dargestellte Heckscheibe, welche am Heckklappenrahmen 3 befestigt sein kann, abdichtet. Ferner ist insbesondere in Fig. 2b) ein Teil des Heckklappenschlosses 35 ersichtlich. Die Ausnehmungen 37 und 39 am oberen Heckklappenrahmenabschnitt 15 dienen zur Aufnehmung der hier nicht näher dargestellten Scharniere zur Anlenkung der Heckklappe 1 an der Fahrzeugstruktur im Bereich der oberen hinteren Dachkante.

Wie ferner aus Teilfigur 3a) hervorgeht, ist im Rahmenabschnitt 17 ein in jeweils randseitig außen liegenden Ausnehmungen 41 und 43 integriertes Führungselement 45 vorgesehen. Das Führungselement 45 besteht beispielsweise aus einem elastischen Abschnitt 47 und einem Gleitblock 49. Des weiteren sind zwei elektrische Stellantriebe 51 und 53 gezeigt, die in die Heckklappe 1 integriert zum Antrieb des Heckklappenelements 23 dienen sollen. Weiterhin ist speziell aus Fig. 3b das Heckklappenelement 23 mit dessen innerem als Verkleidungsteil ausgebildeten Führungselement 31 ersichtlich. Am Führungselement 31 sind an den seitlichen Rändern links und rechts jeweils Zahnstangen 55 vorgesehen, welche letztlich mit den Ritzeln der elektrischen Stellantriebe 51 bzw. 53 in Eingriff gelangen, um das Heckklappenelement 23 anzuheben oder abzusenken. Das Zusammenwirken der Zahnstangen 55 mit den Ritzeln 57 der Stellantriebe 51 ist insbesondere aus Fig. 3c) erkennbar.

Wie bereits vorstehend angesprochen, erstreckt sich der Heckklappenrahmen 3 bei der in Fig. 2 und 3 dargestellten zweiten Ausführungsform von der oberen hinteren Dachkante bis in den Bereich der unteren hinteren Windabrisskante unterhalb einer hier nicht näher dargestellten Heckscheibe. Die wesentlichen Struktur-, Verkleidungs- und Mechanikelemente des verschiebbaren Heckklappenelements 23 sind an diesem befestigt. Das Heckklappenelement 23 bildet zusammen mit dem Rahmen 3 die Heckklappe 1. Zwei am Heckklappenrahmen 3 elastisch befestigte Gleiter 49 führen das bewegliche Heckklappenelement 23 entlang der dort ausgebildeten Laufbahnen 59. Die Hubbewegung erfolgt durch beispielsweise zwei am Rahmenabschnitt 17 befestigte Elektromotoren 51 bzw. 53, deren Ritzel 57 beispielsweise zwei am inneren Verkleidungs- bzw. Strukturteil 31 befestigte Zahnstangen 55 antreiben.

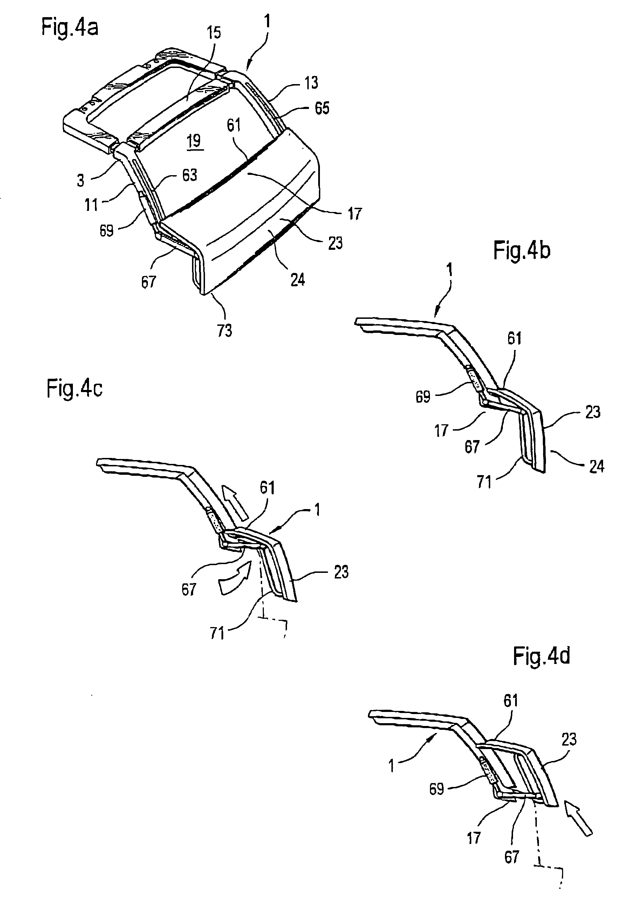

In Fig. 4 ist eine dritte beispielhafte Ausführungsform der Heckklappe 1 veranschaulicht. Die Teilfiguren 4a) bis 4d) zeigen die Heckklappe 1 mit dem in Teilfigur 4a) nach unten geschlossenen Heckklappenelement 23 in einer dreidimensionalen Ansicht, welches in Teilfigur 4b) in einer seitlichen Ansicht weiter gezeigt ist. In Teilfigur 4c) beginnt das Öffnen des Heckklappenelements 23 und Teilfigur 4d) zeigt das Heckklappenelement 23 im vollständig geöffneten Zustand.

Beim Öffnen gleitet die Vorderkante 61 des Heckklappenelements 23 entlang der neben bzw. unter einer hier nicht näher dargestellten Heckscheibe liegenden Führungsbahnen 63 und 65, welche jeweils in den beiden Rahmenabschnitten 11 bzw. 13 angeordnet sind. Am quer verlaufenden Rahmenabschnitt 17 sind links und rechts außen jeweils Kulissenausleger 67 angelenkt, die beispielsweise unterstützt durch Federspeicher 69 verschwenkbar ausgebildet sein können. Die Federspeicher 69 können dabei beispielsweise links und rechts außerhalb am Rand des jeweiligen Rahmenabschnittes 11 bzw. 13 angeordnet und dort gehalten sein. Das Heckklappenelement 23 verfügt über daran angeordnete Kulissenlaufbahnen 71, welche mit den Kulissenauslegern 67 zusammen wirken, so dass das Heckklappenelement 23 gleitverschieblich gehalten ist und auf diese Weise nach oben geschoben werden kann, um dcn Laderaum zu öffnen, bzw. wieder nach unten verschoben werden kann, um den Laderaum zu verschließen. Wie bereits vorstehend angesprochen, sind die Kulissenlaufbahnen 71 am Heckklappenelement 23 befestigt. Die Kulissenlautbahnen 71 erstrecken sich im Wesentlichen zwischen der Windabrisskante 61 und der Heckklappenunterkante 73 des Heckklappenelements 23, wobei letztere der unteren Ladekante des Kraftfahrzeugs benachbart ist. Der Antrieb des Heckklappenelements 23 kann mechanisch, manuell, elektrisch oder pneumatisch mittels der Kulissenausleger 67 und der Kulissenlaufbahnen 71 erfolgen.

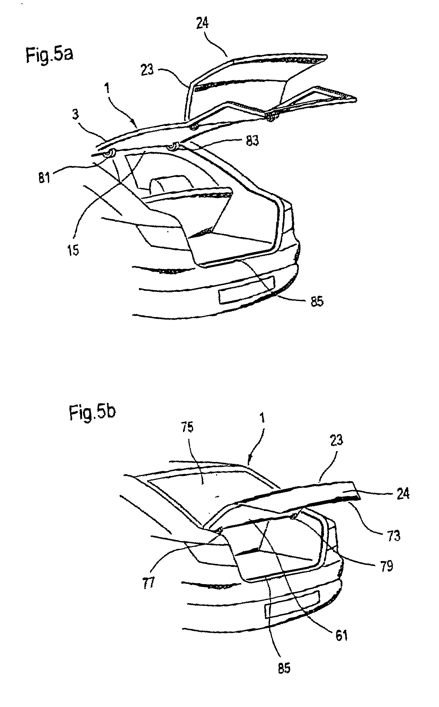

In Fig. 5 ist eine vierte beispielhafte Ausführungsform der Heckklappe 1 veranschaulicht. Das Heckklappenelement 23 ist unterhalb der Heckscheibe 75 im Bereich der Windabrisskante 61 um eine quer zur Fahrzeuglängsrichtung orientierten Achse verschwenkbar angelenkt. Die Anlenkung erfolgt beispielsweise mittels der in Figur 5b) dargestellten Scharniere 77 bzw. 79. Des weiteren erfolgt die Anlenkung der Heckklappe 1 im Bereich des oberen Rahmenabschnittes 15 gegen die Fahrzeugstruktur mittels der dort in Figur 5a) ersichtlichen Scharniere 81 bzw. 83. Dabei können bei einer entsprechenden Ausführungsform die Scharniere 81 bzw. 83 beispielsweise über hydraulische oder elektromechanische Antriebe angesteuert sein, so dass sich die Heckklappe 1 vollautomatisch öffnen und schließen lässt.

Es ist ebenso denkbar, dass bei dieser wie bei vorstehend diskutierten Ausführungsformen gemäß Figuren 1 bis 5 die Heckklappe 1 manuell, teilautomatisch oder vollautomatisch geöffnet oder geschlossen wird. Analoges gilt für das Heckklappenelement 23. Im geschlossenen Zustand ist die untere Hinterkante 73 des Heckklappenelements 23 der unteren Laderaumkante 85 benachbart.

Die vorstehend diskutierte Erfindung schafft damit erstmals eine Heckklappe für ein Kraftfahrzeug mit einem an der Kraftfahrzeugstruktur anlenkbaren Heckklappenrahmen sowie einem daran gelagerten Heckklappenelement. Das Heckklappenelement weist einen zumindest abschnittsweise näherungsweise aufrecht orientierten, zur unteren Ladekante benachbarten Heckklappenabschnitt der Kraftfahrzeugheckklappe auf, wobei das Heckklappenelement von wenigstens einem Heckklappenrahmenabschnitt, vorzugsweise im Wesentlichen in aufrechter Richtung verschieblich und/oder verschwenkbar gehalten ist.

### Bezugszeichenliste

- 1: Heckklappe
- 3: Heckklappenrahmen
- 5: Heckklappenrahmenabschnitt
- 7: Seitliche Rahmenabschnitte
- 9: Seitliche Rahmenabschnitte
- 11: Heckklappenrahmenabschnitt
- 13: Heckklappenrahmenabschnitt
- 15: Heckklappenrahmenabschnitt
- 17: Heckklappenrahmenabschnitt
- 19: Rechteckige Keilrahmen
- 21: Rechteckige Keilrahmen
- 23: Heckklappenelement
- 24: Heckklappenabschnitt
- 25: Parallelführung
- 27: Parallelführung
- 29: Öffnung
- 31: Führungselement
- 33: Dichtungslippe
- 35: Heckklappenschloss
- 37: Ausnehmungen
- 39: Ausnehmungen
- 41: Ausnehmung
- 43: Ausnehmung
- 45: Führungselement
- 47: Elastischer Abschnitt
- 49: Gleitblock
- 51: Elektrischer Stellantrieb
- 53: Elektrischer Stellantrieb
- 55: Zahnstangen
- 57: Ritzel
- 59: Laufbahnen
- 61: Vorderkante
- 63: Führungsbahn
- 65: Führungsbahn
- 67: Kulissenauslegern
- 69: Federspeicher
- 71: Kulissenlaufbahn
- 73: Heckklappenunterkante
- 75: Heckscheibe
- 77: Scharnier
- 79: Scharnier
- 81: Scharnier
- 83: Scharnier
- 85: Laderaumkante

## Patentansprüche

1. Heckklappe (1) für ein Kraftfahrzeug mit einem an der Kraftfahrzeugstruktur anlenkbaren Heckklappenrahmen (3) sowie einem daran gelagerten Heckklappenelement, **dadurch gekennzeichnet, dass** das Heckklappenelement (23) einen zumindest abschnittsweise näherungsweise aufrecht orientierten, zur unteren Ladekante (85) benachbarten Heckklappenabschnitt (24) aufweist, wobei das Heckklappenelement (23) von wenigstens einem Heckklappenrahmenabschnitt (7, 9, 11, 13, 17), vorzugsweise im Wesentlichen in aufrechter Richtung, verschieblich und/oder, vorzugsweise um eine im Wesentlichen quer zur Fahrzeuglängsrichtung orientierte Achse verschwenkbar, gehalten ist.

2. Heckklappe (1) nach Anspruch 1, **dadurch gekennzeichnet, dass** das Heckklappenelement (23) mittels Parallelführungen (25, 27) von zwei gegenüberliegenden, im Wesentlichen senkrecht orientierten Heckklappenrahmenabschnitten (7, 9) gleitverschieblich gehalten ist.

3. Heckklappe (1) nach Anspruch 1, **dadurch gekennzeichnet, dass** das Heckklappenelement (23) an einem näherungsweise waagerecht orientierten, im Wesentlichen quer zur Fahrzeuglängsrichtung verlaufenden Heckklappenrahmenabschnitt (17) gleitverschieblich geführt ist.

4. Heckklappe (1) nach Anspruch 1, **dadurch gekennzeichnet, dass** das Heckklappenelement (23) mittels in gegenüberliegenden, im Wesentlichen in Richtung der jeweiligen C-Säule orientierten Heckklappenrahmenabschnitten (11, 13) angeordneten Führungen (63, 65) verschieblich geführt und an einem näherungsweise waagerecht orientierten, im Wesentlichen quer zur Fahrzeuglängsrichtung verlaufenden weiteren Heckklappenrahmenabschnitt (17) mittels dort angelenkten Kulissenauslegern (67), die mit an dem Heckklappenelement (23) angeordneten Kulissenlaufbahnen (71) gleitverschieblich zusammen wirken, gehalten ist.

5. Heckklappe (1) nach einem der Ansprüche 1 bis 4, **dadurch gekennzeichnet, dass** diese als Fließheckfahrzeug-Heckklappe ausgebildet ist.

6. Heckklappe (1) nach einem der Ansprüche 1 bis 4, **dadurch gekennzeichnet, dass** diese als Stufenheckfahrzeug-Heckklappe ausgebildet ist.

7. Heckklappe (1) nach einem der Ansprüche 1 bis 6, **dadurch gekennzeichnet, dass** diese eine am Heckklappenrahmen (3) befestigte Heckscheibe (75) aufweist.
